# EUROPÄISCHE PATENTANMELDUNG

(11) **EP 4 068 582 A2**
(43) Veröffentlichungstag der Anmeldung: **05.10.2022**
(21) Anmeldenummer: 22164188.9
(22) Anmeldetag: 24.03.2022
(51) Int. Cl.: H02K 5/20, H02K 5/124

(54) **ELEKTRISCHE MASCHINE MIT EINEM RESERVOIR FÜR KÜHLMITTELLECKAGE**

(30) Priorität: 31.03.2021 DE 102021203304
(71) Anmelder: Valeo eAutomotive Germany GmbH, 91056 Erlangen (DE)
(72) Erfinder: Dietz, Andreas, 97616 c/o VSeA, Bad Neustadt a.d.Saale (DE); Holzheimer, Philipp, 97616 c/o VSeA, Bad Neustadt a.d.Saale (DE)
(74) Vertreter: Valeo Powertrain Systems

(57) **Zusammenfassung**

Elektrische Maschine (1), umfassend ein Gehäuse (2), in dem ein Stator (3) und ein bezüglich des Stators (3) drehbarer Rotor (4) aufgenommen sind, eine Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und eine Abdichteinrichtung (21) zum Abdichten des Rotors (4) gegenüber einem Innenraum (22) des Gehäuses, wobei zwischen der Abdichteinrichtung (21) und dem Gehäuse (2) ein Reservoir (12) für eine bei einer Drehung des Rotors (4) entstehende Kühlmittelleckage gebildet ist. Daneben werden ein Antriebsstrang und ein Fahrzeug (17) mit einer derartigen elektrischen Maschine (1) und ein Verfahren zum Betreiben der elektrischen Maschine (1) beschrieben.

## Beschreibung

Die Erfindung betrifft eine elektrische Maschine, umfassend ein Gehäuse, in dem ein Stator und ein bezüglich des Stators drehbarer Rotor aufgenommen sind, eine Kühleinrichtung mit einem von einem Kühlmittel durchströmbaren Kühlkanal, der sich von einem Einlass durch das Gehäuse und durch den Rotor bis zu einem Auslass erstreckt und eine Abdichteinrichtung zum Abdichten des Rotors gegenüber einem Innenraum des Gehäuses.

Elektrische Maschinen dieser Art werden in zunehmendem Maße bei elektrisch angetriebenen Fahrzeugen oder Hybridfahrzeugen verwendet. Die elektrische Maschine wird dabei überwiegend als Elektromotor für den Antrieb eines Rads oder einer Achse des Fahrzeugs eingesetzt. Der Elektromotor kann unter anderem als Synchronmotor oder Asynchronmotor ausgebildet sein.

Der Elektromotor ist zumeist mechanisch mit einem Getriebe zur Drehzahlanpassung gekoppelt. Daneben ist der Elektromotor normalerweise mit einem Wechselrichter verbunden, der aus einer von einer Batterie gelieferten Gleichspannung eine Wechselspannung für den Betrieb der elektrischen Maschine erzeugt, insbesondere eine mehrphasige Wechselspannung.

Es ist auch möglich, die elektrische Maschine als Generator zur Rekuperation von Bewegungsenergie eines Fahrzeugs zu betreiben, wobei die Bewegungsenergie zunächst in elektrische Energie und dann in chemische Energie der Batterie umgewandelt wird.

Der Rotor der elektrischen Maschine verfügt normalerweise über eine Rotorwelle, die von einem zylinderförmigen Rotorkörper umschlossen ist. Der Rotorkörper kann neben einem Paket laminierter Metallbleche unter anderem Permanentmagneten oder eine Wicklung mit einem elektrischen Leiter aufweisen.

Aufgrund der beim Betrieb der elektrischen Maschine entstehenden Wärme weist die elektrische Maschine eine Kühleinrichtung zum Abführen der Wärme auf, die einen von einem flüssigen Kühlmittel durchströmbaren Kühlkanal umfasst. Der Kühlkanal erstreckt sich von einem Einlass durch das Gehäuse der elektrischen Maschine und weiter durch den Rotor bis zu einem Auslass, der in dem Gehäuse ausgebildet ist. Das Kühlmittel, bei dem es sich beispielsweise um eine Wasser-Glykol-Mischung handelt, wird in einem Kreislauf gefördert.

Eine Abdichteinrichtung dichtet den Rotor gegenüber dem Gehäuse ab, zum Beispiel in Axialrichtung und Radialrichtung des Rotors. Insbesondere ist der mit Kühlmittel gefüllte Kühlkanal, welcher durch den Rotor verläuft, gegenüber einem Innenraum des Gehäuses abgedichtet, so dass kein Kühlmittel aus dem Kühlkanal in den Innenraum gelangen und dort zu einem Schaden führen kann beispielsweise durch Korrosion. Der Innenraum kann unter anderem den Stator aufnehmen und ansonsten mit Luft gefüllt sein.

Die temperaturbedingte Volumenänderung der Luft im Inneren des Gehäuses macht es erforderlich, eine Belüftung bzw. Entlüftung vorzusehen, die die Entstehung eines Unterdrucks oder eines Überdrucks in dem Gehäuse vermeidet. Dazu kann ein Entlüftungskanal vorgesehen sein, der sich von der Abdichteinrichtung bis zu einer Öffnung des Gehäuses erstreckt.

Es hat sich herausgestellt, dass beim Betrieb der elektrischen Maschine trotz der Abdichteinrichtung eine zumindest geringe technische Leckage von Kühlmittel über die Abdichteinrichtung auftreten kann. Diese technische Leckage (Kühlmittelleckage) tritt insbesondere dann auf, wenn die elektrische Maschine in einer bestimmten Drehrichtung betrieben wird. Bei einem elektrisch angetriebenen Fahrzeug kann die Leckage zum Beispiel bei Rückwärtsfahrt auftreten.

Um dieses Problem zu lösen, ist bereits vorgeschlagen worden, die technische Leckage in einem separaten Reservoir, das heißt in einem dafür vorgesehenen Behälter, zu sammeln. Dieser Behälter muss allerdings in bestimmten Zeitabständen im Rahmen der Wartung des Fahrzeugs entleert werden.

Der Erfindung liegt die Aufgabe zugrunde, eine elektrische Maschine anzugeben, die mit geringerem Aufwand betrieben werden kann.

Zur Lösung dieser Aufgabe ist bei einer elektrischen Maschine der eingangs genannten Art erfindungsgemäß vorgesehen, dass zwischen der Abdichteinrichtung und dem Gehäuse ein Reservoir für eine bei einer Drehung des Rotors entstehende Kühlmittelleckage gebildet ist.

Die Erfindung beruht auf der Erkenntnis, dass auf einen separaten Behälter zum Auffangen von Kühlmittelleckage verzichtet werden kann, indem diese Funktion von einem Reservoir übernommen wird, das zwischen der Abdichteinrichtung und dem Gehäuse gebildet ist. Dadurch wird einerseits Bauraum eingespart, viel wichtiger ist jedoch, dass auf eine Entleerung der Kühlmittelleckage im Rahmen der Wartung des Fahrzeugs verzichtet werden kann. Die erfindungsgemäße elektrische Maschine kann somit wartungsfrei betrieben werden, wodurch sich eine Kosteneinsparung ergibt.

Vorzugsweise ist die Abdichteinrichtung zum Abdichten des Rotors in eine Radialrichtung und eine Axialrichtung ausgebildet. Dadurch wird vermieden, dass Kühlmittel aus dem Kühlkanal austritt und zum Beispiel in ein Lager der Rotorwelle gelangt. Die Abdichtung in Radialrichtung kann mit einem Radialwellendichtring realisiert sein. Die Abdichtung in Axialrichtung kann mit einer mechanischen Hybriddichtung realisiert sein, zum Beispiel mit einer Gleitringdichtung.

Ferner kann die erfindungsgemäße elektrische Maschine so ausgebildet sein, dass die Kühlmittelleckage bei einer Drehung des Rotors in eine erste Drehrichtung entsteht, indem ein kleines Volumen des Kühlmittels die Abdichteinrichtung passiert. Damit entweicht das kleine Volumen Kühlmittel aus dem Kühlmittelkreislauf und sammelt sich als Leckage im Gehäuse der elektrischen Maschine.

Aufgrund der Konstruktion der Abdichteinrichtung entsteht die Kühlmittelleckage lediglich bei einer Drehung des Rotors in die erste Drehrichtung. Bei einem mit der elektrischen Maschine angetriebenen Fahrzeug kann die erste Drehrichtung einer Rückwärtsfahrt des Fahrzeugs zugeordnet sein. Die Kühlmittelleckage sammelt sich unter der Wirkung der Schwerkraft im unteren Bereich eines zwischen der Abdichteinrichtung und dem Gehäuse angeordneten Hohlraums, dem Reservoir. Das Reservoir kann insbesondere als unterer Bereich eines die Abdichteinrichtung umgebenden Freiraums gebildet sein.

Mit besonderem Vorteil kann es bei der erfindungsgemäßen elektrischen Maschine vorgesehen sein, dass die Kühlmittelleckage bei einer Drehung des Rotors in eine zur ersten Drehrichtung entgegengesetzte zweite Drehrichtung wieder aus dem Reservoir heraus gefördert wird. Das bedeutet, dass bei einer Vorwärtsfahrt des Fahrzeugs das mit der Kühlmittelleckage gefüllte Reservoir selbsttätig entleert wird.

Somit erfolgt automatisch eine Entleerung der Kühlmittelleckage aus dem Reservoir, wenn sich das Fahrzeug vorwärtsbewegt. Wesentlich ist dabei, dass die Kühlmittelleckage über die Abdichteinrichtung wieder dem Kühlkreislauf zugeführt wird. Die Kühlmittelleckage muss somit weder in einem besonderen Behälter aufgefangen werden, noch kann sie in die Umwelt gelangen.

Eine Weiterbildung der Erfindung sieht vor, dass der Rotor oder eine mit dem Rotor drehbare Komponente der Abdichteinrichtung eine die Förderung der Kühlmittelleckage aus dem Reservoir bewirkende Oberflächenstruktur aufweist. Damit kann das Reservoir auf besonders einfache Weise reguliert werden.

Die Oberflächenstruktur kann insbesondere so beschaffen sein, dass das in dem Reservoir gesammelte flüssige Kühlmittel beim Drehen des Rotors in die zweite Drehrichtung aus dem Reservoir hinaus gefördert und in den Kühlkanal zurückgeführt wird.

Hierfür kann die drehbare Komponente als mit der Oberflächenstruktur ausgestatteter Ring einer Gleitringdichtung ausgebildet sein, insbesondere als Ring der oben genannten Gleitringdichtung zur Abdichtung des Rotors in Axialrichtung. Die Oberflächenstruktur kann auf dem Ring eingraviert sein, beispielsweise mittels einem Laser.

Eine solcher Ring ist in EP3190317A1 beschrieben und kann spiralförmige Nuten aufweisen, mit denen sich Kühlmittel aus dem Reservoir zurück in den Kühlkanal pumpen lässt. Zusätzlich kann der Ring sogenannte Rayleigh-Stufen aufweisen, welche die Gleitfähigkeit der Gleitringdichtung verbessern.

Weiterhin kann die Abdichteinrichtung eine das Reservoir für die Kühlmittelleckage begrenzende Radialwellendichtung umfassen. Das Reservoir erstreckt sich somit zwischen der Radialwellendichtung und der Innenseite des Gehäuses der elektrischen Maschine.

Die oben genannte Aufgabe wird ferner mit einem Antriebsstrang für ein Fahrzeug gelöst, der eine elektrische Maschine gemäß der Erfindung aufweist. Zusätzlich kann der Antriebsstrang über ein mit der elektrischen Maschine gekoppeltes Getriebe und/oder einen mit der Maschine verbundenen Wechselrichter verfügen, mit dem eine zum Betreiben der elektrischen Maschine benötigte mehrphasige Wechselspannung bereitstellbar ist.

Die Aufgabe wird weiterhin mit einem Fahrzeug gelöst, das einen derartigen Antriebsstrang aufweist.

Daneben betrifft die Erfindung ein Verfahren zum Betreiben einer elektrischen Maschine, mit einem Gehäuse, in dem ein Stator und ein bezüglich des Stators drehbarer Rotor aufgenommen sind, einer Kühleinrichtung, einem von einem Kühlmittel durchströmbaren Kühlkanal, der sich von einem Einlass durch das Gehäuse und durch den Rotor bis zu einem Auslass erstreckt, und einer Abdichteinrichtung zum Abdichten des Rotors gegenüber einem Innenraum des Gehäuses.

Das erfindungsgemäße Verfahren zeichnet sich dadurch aus, dass zwischen der Abdichteinrichtung und dem Gehäuse ein Reservoir für Kühlmittelleckage, die bei einer Drehung des Rotors in eine erste Drehrichtung entsteht, ausgebildet ist, wobei die Kühlmittelleckage bei einer Drehung des Rotors in eine zur ersten Drehrichtung entgegengesetzte zweite Drehrichtung wieder aus dem Reservoir heraus gefördert wird.

Die im Zusammenhang mit der Beschreibung der elektrischen Maschine erläuterten Vorteile und Einzelheiten gelten sinngemäß selbstverständlich auch für das erfindungsgemäße Verfahren.

Die Erfindung wird nachfolgend anhand eines Ausführungsbeispiels unter Bezugnahme auf die Figuren erläutert. Die Figuren sind schematische Darstellungen und zeigen:
- Fig. 1: eine perspektivische geschnittene Ansicht einer erfindungsgemäßen elektrischen Maschine;
- Fig. 2: eine vergrößerte Ansicht des in Fig. 1 rechten Endes des Rotors;
- Fig. 3: ein Detail der Abdichteinrichtung; und
- Fig. 4: ein erfindungsgemäßes Fahrzeug.

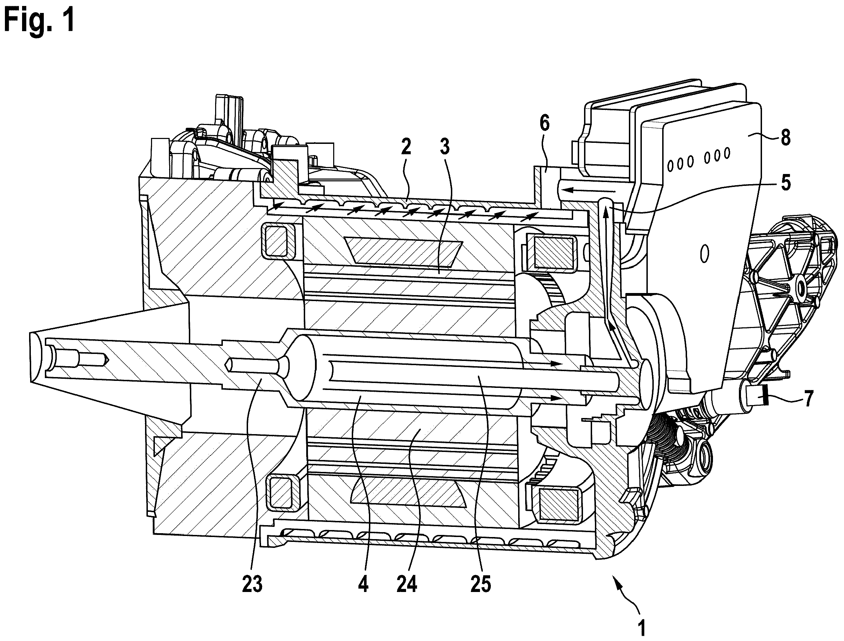

Die in **Fig. 1** in einer perspektivischen geschnittenen Ansicht gezeigte elektrische Maschine 1 gehört zum Antriebsstrang eines Fahrzeugs.

Die elektrische Maschine 1 umfasst ein Gehäuse 2, in dem ein Stator 3 und ein bezüglich des Stators 3 drehbarer Rotor 4 mit einer Rotorwelle 23 aufgenommen sind. Die Rotorwelle 23 ist von einem zylinderförmigen Rotorkörper 24 umschlossen. Die elektrische Maschine 1 umfasst weiterhin eine Kühleinrichtung mit einem von einem Kühlmittel durchströmbaren Kühlkanal 5, der sich von einem Einlass 7 durch das Gehäuse 2 bis zu einem Auslass 6 erstreckt.

Der Einlass 7 und der Auslass 6 sind über nicht dargestellte Kühlmittelleitungen mit einer Pumpe verbunden, sodass das Kühlmittel in einem Kreislauf gefördert wird. Das Kühlmittel führt bei dem Betrieb der elektrischen Maschine 1 erzeugte Wärme ab.

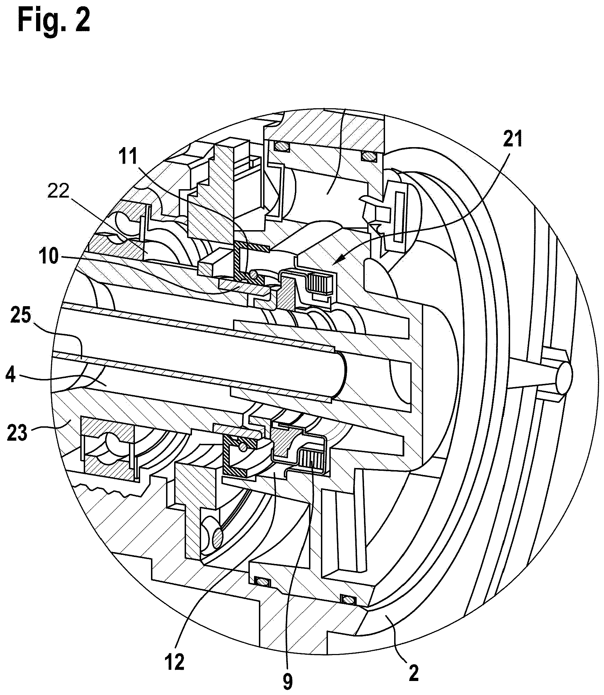

In Fig. 1 erkennt man, dass sich der Kühlkanal 5 von dem Einlass 7 durch das Gehäuse 2 erstreckt. Das Kühlmittel strömt durch ein Kühlrohr 25 in die hohle Rotorwelle 23 des Rotors 4 hinein. Am Ende des Kühlrohrs 25 wird die Strömungsrichtung des Kühlmittels umgekehrt, wonach das Kühlmittel an einer Abdichteinrichtung 21 (siehe Fig. 2) vorbei aus der Rotorwelle 23 herausströmt und weiter zum Auslass 6 gelangt.

An der Außenseite des Gehäuses 2 ist ein Wechselrichter 8 angeordnet, der die für den Betrieb der elektrischen Maschine 1 benötigte Wechselspannung bereitstellt.

**Fig. 2** ist eine geschnittene Ansicht des rechten Endes der in Fig. 1 gezeigten Rotorwelle 23. Die Abdichteinrichtung 21 dient zum Abdichten der Rotorwelle 23 in Radialrichtung und Axialrichtung gegenüber dem Gehäuse 2. Insbesondere dient die Abdichteinrichtung 21 zum Abdichten der Rotorwelle 23 gegenüber einem Innenraum 22 des Gehäuses 2, in dem der Stator 3 aufgenommen ist. Mit dem Abdichten wird vermieden, dass Kühlmittel in den Innenraum 22 gelangt und dort zu Korrosion der Wicklungen des Stators 3 führt.

Die Abdichteinrichtung 21 umfasst eine Gleitringdichtung 9 und einen Radialwellendichtring 11. Die Gleitringdichtung 9 ist in Axialrichtung zwischen dem (in Fig. 2 rechten) freien Ende der Rotorwelle 23 und einem Abschnitt des Gehäuses 2 angeordnet. Die Gleitringdichtung 9 dichtet die Rotorwelle 23 axial ab.

Das genannte Ende der Rotorwelle 23 ist von einer Hülse 10 aus gehärtetem Edelstahl umschlossen. Die Hülse 10 ist wiederum von dem Radialwellendichtring 11 umschlossen, der die Rotorwelle 23 radial gegenüber dem Innenraum 22 des Gehäuses 2 abdichtet.

Die Abdichteinrichtung 21 hat die Eigenschaft, dass bei einer bestimmten Drehrichtung der elektrischen Maschine, die der Rückwärtsfahrt des elektrisch angetriebenen Fahrzeugs zugeordnet ist, die erwähnte technische Leckage entsteht. Allerdings weist diese technische Leckage lediglich ein geringes Volumen in der Größenordnung von einigen Millilitern auf.

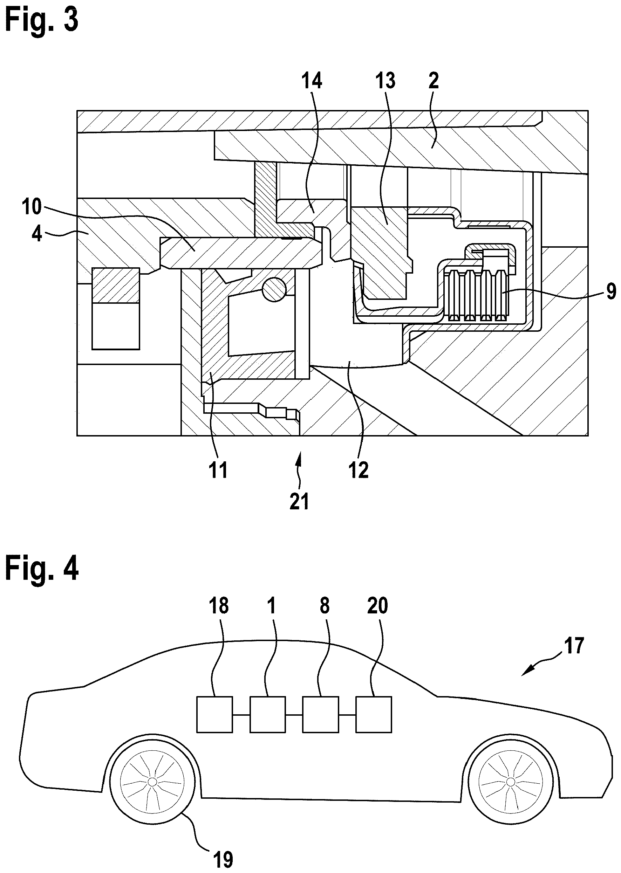

In der geschnittenen Ansicht von Fig. 2 und in der vergrößerten Ansicht von **Fig. 3**, die ein Detail der Abdichteinrichtung 21 zeigt, erkennt man, dass zwischen der Gleitringdichtung 9, dem Radialwellendichtung 11 und dem die Dichtungen umgebenden Abschnitt im Inneren des Gehäuses 2 ein umlaufender Freiraum gebildet ist. Dieser Freiraum, genauer gesagt dessen im Einbauzustand der elektrischen Maschine 1 unterer Bereich, dient als Reservoir 12 für die Kühlmittelleckage. Wenn durch den Betrieb der elektrischen Maschine 1, insbesondere bei Rückwärtsfahrt, die technische Leckage entsteht, sammelt sich diese in dem Reservoir 12 an.

Bei einer Umkehrung der Drehrichtung wird diese Kühlmittelleckage wieder über die Abdichteinrichtung 21 dem Kühlmittelkreislauf zugeführt. Wenn der Rotor 4 somit in die zweite, zur ersten Drehrichtung entgegengesetzte Drehrichtung gedreht wird, wird das Reservoir 12 wieder entleert.

Die Gleitringdichtung 9 umfasst einen feststehenden Ring 13 und einen mit der Rotorwelle 23 drehbaren Ring 14, der eine spezielle Oberflächenstruktur aufweist. Insbesondere kann die Gleitringdichtung 9 als eine mechanische Hybriddichtung ausgebildet sein.

Die in dem Reservoir 12 angesammelte Kühlmittelleckage wird durch die Oberflächenstruktur des Rings 14 wieder über die Abdichteinrichtung 21 zurück in den Kühlmittelkreislauf gefördert beziehungsweise geführt.

Bei dem Verfahren zum Betreiben der elektrischen Maschine 1 wird somit Kühlmittelleckage, die bei einer Drehung des Rotors 4 in die erste Drehrichtung entsteht, in dem Reservoir 12 gesammelt und bei einer Drehung des Rotors 4 in eine zur ersten Drehrichtung entgegengesetzte zweite Drehrichtung wieder aus dem Reservoir 12 heraus gefördert.

**Fig. 4** zeigt ein Fahrzeug 17 mit einem Antriebsstrang, der die elektrische Maschine 1 umfasst. Die elektrische Maschine 1 ist über ein Getriebe 18 mit einem Rad 19 des Fahrzeugs 17 gekoppelt. Daneben ist die elektrische Maschine 1 mit dem Wechselrichter 8 verbunden. Die in einer Batterie 20 gespeicherte Energie wird durch den Wechselrichter 8 in eine Wechselspannung für den Betrieb der elektrischen Maschine 1 umgewandelt.

### Bezugszeichenliste

- 1: elektrische Maschine
- 2: Gehäuse
- 3: Stator
- 4: Rotor
- 5: Kühlkanal
- 6: Auslass
- 7: Einlass
- 8: Wechselrichter
- 9: Gleitringdichtung
- 10: Hülse
- 11: Radialwellendichtring
- 12: Reservoir
- 13: feststehender Ring
- 14: drehbarer Ring
- 17: Fahrzeug
- 18: Getriebe
- 19: Rad
- 20: Batterie
- 21: Abdichteinrichtung
- 22: Innenraum
- 23: Rotorwelle
- 24: Rotorkörper
- 25: Kühlrohr

## Patentansprüche

1. Elektrische Maschine (1), umfassend:
- ein Gehäuse (2), in dem ein Stator (3) und ein bezüglich des Stators (3) drehbarer Rotor (4) aufgenommen sind,
- eine Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und
- eine Abdichteinrichtung (21) zum Abdichten des Rotors (4) gegenüber einem Innenraum (22) des Gehäuses (2),
**dadurch gekennzeichnet, dass** zwischen der Abdichteinrichtung (21) und dem Gehäuse (2) ein Reservoir (12) für eine bei einer Drehung des Rotors (4) entstehende Kühlmittelleckage gebildet ist.

2. Elektrische Maschine (1) nach Anspruch 1, wobei die Abdichteinrichtung (21) zum Abdichten des Rotors (4) in eine Radialrichtung und eine Axialrichtung ausgebildet ist.

3. Elektrische Maschine nach Anspruch 1 oder 2, wobei die elektrische Maschine (1) so ausgebildet ist, dass die Kühlmittelleckage bei einer Drehung des Rotors (4) in eine erste Drehrichtung entsteht und bei einer Drehung des Rotors (4) in eine zur ersten Drehrichtung entgegengesetzte zweite Drehrichtung wieder aus dem Reservoir (12) heraus gefördert wird.

4. Elektrische Maschine nach Anspruch 3, wobei die elektrische Maschine (1) so ausgebildet ist, dass die Kühlmittelleckage bei der Drehung des Rotors (4) in die zweite Drehrichtung in den Kühlkanal (5) zurückgeführt wird.

5. Elektrische Maschine nach Anspruch 3 oder 4, wobei der Rotor (4) oder eine mit dem Rotor (4) drehbare Komponente der Abdichteinrichtung (21) eine die Förderung der Kühlmittelleckage aus dem Reservoir (12) bewirkende Oberflächenstruktur aufweist.

6. Elektrische Maschine nach Anspruch 5, wobei die drehbare Komponente als Ring (14) einer Gleitringdichtung (9) ausgebildet ist.

7. Elektrische Maschine nach einem der vorangehenden Ansprüche, wobei die Abdichteinrichtung (21) einen das Reservoir (12) für die Kühlmittelleckage begrenzenden Radialwellendichtring (11) umfasst.

8. Antriebsstrang für ein Fahrzeug, der eine elektrische Maschine (1) nach einem der Ansprüche 1 bis 7 aufweist.

9. Fahrzeug mit einem Antriebsstrang gemäß Anspruch 8.

10. Verfahren zum Betreiben einer elektrischen Maschine (1) mit einem Gehäuse (2), in dem ein Stator (3) und ein bezüglich des Stators (3) drehbarer Rotor (4) aufgenommen sind, einer Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und einer Abdichteinrichtung (21) zum Abdichten des Rotors (4) gegenüber einem Innenraum (22) des Gehäuses (2), **dadurch gekennzeichnet, dass** zwischen der Abdichteinrichtung (21) und dem Gehäuse (2) ein Reservoir (12) für Kühlmittelleckage, die bei einer Drehung des Rotors (4) in eine erste Drehrichtung entsteht, ausgebildet ist, wobei die Kühlmittelleckage bei einer Drehung des Rotors (4) in eine zur ersten Drehrichtung entgegengesetzte zweite Drehrichtung wieder aus dem Reservoir (12) heraus gefördert wird.
